# EUROPEAN PATENT APPLICATION

(11) **EP 4 610 229 A1**
(43) Date of publication of application: **03.09.2025**
(21) Application number: 23882269.6
(22) Date of filing: 08.09.2023
(51) Int. Cl.: C01F 11/18, C04B 2/02, B09B 101/30, B09B 3/70

(54) **CALCIUM CARBONATE RECOVERY METHOD, CALCIUM CARBONATE RECOVERY DEVICE, AND CALCIUM CARBONATE RECOVERY PROGRAM**

(30) Priority: 27.10.2022 JP 2022172328
(71) Applicant: Sumitomo Heavy Industries, Ltd., Tokyo 141-6025 (JP)
(72) Inventor: KATSUTA Naoko, Yokosuka-shi Kanagawa 237-8555 (JP)
(74) Representative: Louis Pöhlau Lohrentz
(86) International application number: PCT/JP2023/032914
(87) International publication number: WO 2024/090056

(57) **Abstract**

A calcium carbonate recovery device 8 includes: an alkaline aqueous solution generation unit 81 that generates an alkaline aqueous solution containing calcium hydroxide by adding water to a combustion ash containing calcium oxide and/or the calcium hydroxide and calcium carbonate and dissolving the calcium oxide and/or the calcium hydroxide in the water; a residue separation unit 82 that separates a solid residue containing the calcium carbonate from the alkaline aqueous solution; a calcium carbonate elution unit 83 that elutes the calcium carbonate by adding carbon dioxide to the residue; and a calcium carbonate precipitation unit 85 that precipitates solid calcium carbonate by adding the alkaline aqueous solution to the eluted calcium carbonate.

## Description

### Technical Field

The present invention relates to a calcium carbonate recovery method and the like.

### Background Art

In PTL 1, there is disclosed a technique for separating and recovering calcium carbonate from concrete sludge. After the concrete sludge is separated into a solid sludge cake and a liquid sludge liquid, carbon dioxide is added to the sludge liquid to precipitate solid calcium carbonate.

### Citation List

### Patent Literature

[PTL 1] Japanese Unexamined Patent Publication No. 2009-279552

### Summary of Invention

### Technical Problem

The technique of PTL 1 is suitable in a case where most of calcium to be separated and recovered as calcium carbonate is contained in a liquid such as a sludge liquid. However, in a case where calcium is also contained in a solid such as a concrete cake, the calcium is discarded without being separated and recovered as calcium carbonate.

The present invention has been made in view of such circumstances, and an object of the present invention is to provide a calcium carbonate recovery method and the like, in which it is possible to effectively recover calcium carbonate from a combustion ash containing calcium in a plurality of forms.

### Solution to Problem

In order to solve the above problems, a calcium carbonate recovery method according to an aspect of the present invention includes: an alkaline aqueous solution generation step of generating an alkaline aqueous solution containing calcium hydroxide by adding water to a combustion ash containing calcium oxide and/or the calcium hydroxide and calcium carbonate and dissolving the calcium oxide and/or the calcium hydroxide in the water; a residue separation step of separating a solid residue containing the calcium carbonate from the alkaline aqueous solution; a calcium carbonate elution step of eluting the calcium carbonate by adding carbon dioxide to the residue; and a calcium carbonate precipitation step of precipitating solid calcium carbonate by adding the alkaline aqueous solution to the eluted calcium carbonate.

According to this aspect, calcium carbonate can be effectively recovered from the combustion ash containing calcium oxide and/or calcium hydroxide and calcium carbonate. Specifically, the calcium oxide and/or the calcium hydroxide becomes calcium hydroxide in an alkaline aqueous solution, and is effectively precipitated in the calcium carbonate precipitation step together with the calcium carbonate eluted from the residue by carbon dioxide.

According to another aspect of the present invention, there is provided a calcium carbonate recovery device. The device includes: an alkaline aqueous solution generation unit configured to generate an alkaline aqueous solution containing calcium hydroxide by adding water to a combustion ash containing calcium oxide and/or the calcium hydroxide and calcium carbonate and dissolving the calcium oxide and/or the calcium hydroxide in the water; a residue separation unit configured to separate a solid residue containing the calcium carbonate from the alkaline aqueous solution; a calcium carbonate elution unit configured to elute the calcium carbonate by adding carbon dioxide to the residue; and a calcium carbonate precipitation unit configured to precipitate solid calcium carbonate by adding the alkaline aqueous solution to the eluted calcium carbonate.

Any combination of the above components or embodiments in which expressions of the components are converted in methods, devices, systems, recording mediums, computer programs, or the like are also included in the present invention.

### Advantageous Effects of Invention

According to the present invention, calcium carbonate can be effectively recovered from the combustion ash containing calcium in a plurality of forms.

### Brief Description of Drawings

Fig. 1 schematically shows a CFB boiler and a calcium carbonate recovery device that recovers calcium carbonate from a combustion ash combusted in the CFB boiler.
Fig. 2 shows the existence proportions of carbon dioxide, a hydrogen carbonate ion, and a carbonate ion according to the pH of a solution.

### Description of Embodiments

Hereinafter, a mode for carrying out the present invention (hereinafter also referred to as an embodiment) will be described in detail with reference to the drawings. In the description and/or the drawings, identical or equivalent components, members, processing, and the like are denoted by the same reference numerals, and overlapping description thereof will be omitted. The scales or shapes of each part shown in the drawings are conveniently set to simplify the description, and should not be interpreted as being limited unless otherwise stated. The embodiment is exemplary and does not limit the scope of the present invention. All features or combinations thereof described in the embodiments are not necessarily essential to the present invention.

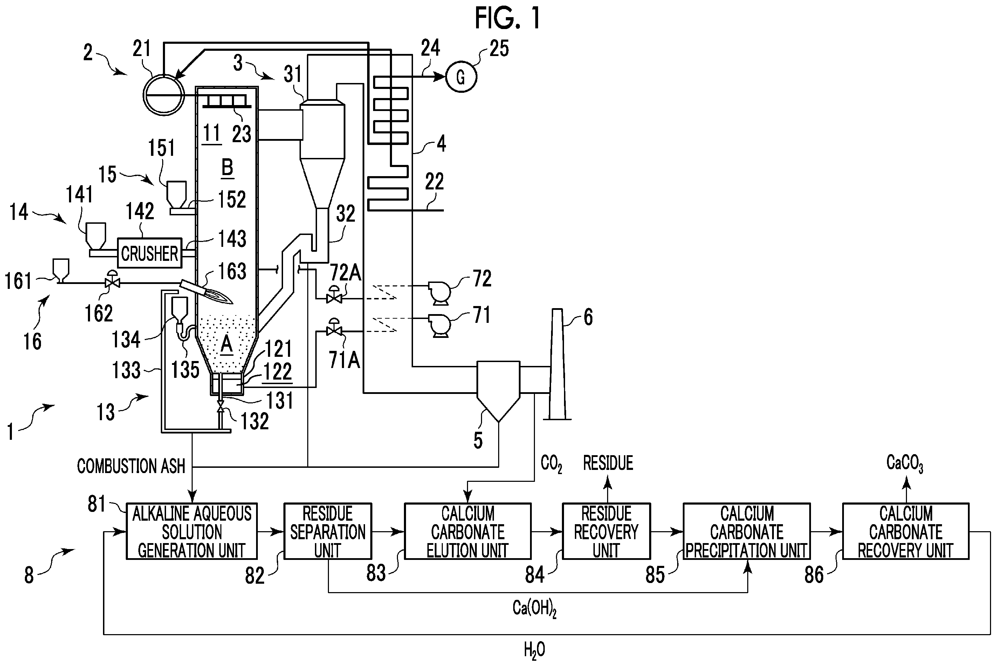

Fig. 1 schematically shows a circulating fluidized bed (CFB) boiler as a combustion facility, and a calcium carbonate recovery device 8 according to the present embodiment that recovers calcium carbonate from an ash (combustion ash) of biomass fuel or the like combusted in the CFB boiler. In addition, any other combustion facilities such as a bubbling fluidized bed (BFB) boiler or a rotary kiln may be used instead of the CFB boiler.

The CFB boiler includes a combustion section 1 in which fossil fuel such as biomass fuel or coal is supplied into and combusted in a furnace 11 in which a fluidized material such as silica sand is fluidized, a vapor generation section 2 that generates vapor from water by heat generated in the combustion section 1, a fluidized material circulation section 3 as a circulation section that collects the fluidized material flowing out of the furnace 11 and returns the fluidized material into the furnace 11, a heat transfer section 4 that heats the water which is supplied to the vapor generation section 2 or the vapor which is generated in the vapor generation section 2 with a high-temperature exhaust of the combustion section 1, an exhaust treatment device 5 that separates and collects soot or dust in the exhaust from the heat transfer section 4, and a chimney 6 that releases the exhaust purified by the exhaust treatment device 5 into the atmosphere.

The combustion section 1 includes the furnace 11 as a combustion chamber. The furnace 11 has a long tubular shape in a vertical direction, and a bottom portion thereof has a tapered shape in order to increase the density of solid fuel such as biomass fuel or coal or a fluidized material and to enable efficient combustion. The bottom portion of the furnace 11 does not need to have a tapered shape, and the furnace 11 may be formed in a tubular shape to have a substantially constant cross-sectional shape from a top portion to the bottom portion. A region, which is denoted by "A", of the bottom portion of the furnace 11 indicates a fluidized bed (also called a fluid bed or a sand layer) made of a high-density fluidized material. In the fluidized bed A, a fluidized material such as silica sand in a powder form, a particle form, or a lump form is fluidized by a fluidizing fluid which is supplied from the bottom portion of the furnace 11. The solid fuel such as the biomass fuel or the coal input into the fluidized bed A is efficiently combusted by being repeatedly brought into contact with a high-temperature fluidized material to be stirred in the fluidized bed A.

Since the fluidized material rises in the furnace 11 due to ascending air current caused by combustion, the fluidized material is also present in a free board B that is a space above the fluidized bed A. The density of the fluidized material in the free board B is lower than that of the fluidized material in the fluidized bed A, and is reduced toward an upper side of the furnace 11. In the free board B, the fuel that has not been completely combusted in the fluidized bed A is combusted while coming into contact with a floating fluidized material. Although silica sand has been exemplified as the fluidized material, any fluidized material may be used as long as the fluidized material functions as a medium transferring heat to fuel while maintaining a solid state and flowing without being combusted even in the high-temperature furnace 11 and may be, for example, other types of sand, stones such as limestone, and ash.

The bottom portion of the furnace 11 is provided with a porous plate (also called a dispersion plate) 121 as a fluid permeable portion that is made of a porous material allowing a fluidizing fluid such as air to permeate. An air box 122, which is a space immediately below the porous plate 121, configures a fluidizing fluid supply portion that supplies pressurized air or the like as the fluidizing fluid, which is supplied through a first flow rate control valve 71A from a first blower 71 as a blower, into the furnace 11 through the porous plate 121. The fluidizing fluid supplied to the bottom portion of the furnace 11 by the air box 122 fluidizes the fluidized material to form the fluidized bed A and is used for the combustion of the fuel in the fluidized bed A or the free board B. In Fig. 1, the fluid permeable portion has been described using the porous plate 121 as an example. However, the fluid permeable portion may be any portion capable of causing the fluidized material to flow in the fluidized bed A, and may be formed of, for example, many plates in which slits for supplying the fluidizing fluid into the furnace 11 are formed.

A second blower 72 which is provided in addition to the first blower 71 supplies pressurized air or the like into the free board B through a second flow rate control valve 72A in order to promote the combustion of the fuel in the free board B and to suppress the generation of harmful substances such as dioxin or carbon monoxide due to incomplete combustion.

An external circulation mechanism 13 that includes a circulation path outside the furnace 11 is provided to circulate the fluidized material in the fluidized bed A. The external circulation mechanism 13 includes: an extraction pipe 131 that communicates with the bottom portion of the furnace 11 to be capable of extracting a part of the fluidized material in the fluidized bed A; an on-off valve 132 that controls the opening and closing of the extraction pipe 131 to be capable of adjusting the flow rate of the fluidized material, that is, the amount of the fluidized material to be extracted via the extraction pipe 131; a fluidized material conveyor 133 such as a bucket conveyor that transports the fluidized material extracted via the extraction pipe 131 upward; a fluidized material silo 134 that is provided on an outer periphery of the furnace 11 corresponding to an upper portion of the fluidized bed A and receives the fluidized material transported by the fluidized material conveyor 133; and a fluidized material re-input part 135 that inputs the fluidized material stored in the fluidized material silo 134 into the furnace 11 again.

The extraction pipe 131, the on-off valve 132, the fluidized material conveyor 133, the fluidized material silo 134, and the fluidized material re-input part 135 configures a fluidized material circulation path that connects a bottom surface and a side surface of the furnace 11 on the outside of the furnace 11. That is, the fluidized material extracted from the bottom surface of the furnace 11 via the extraction pipe 131 is input from the side surface of the furnace 11 into the fluidized bed A again by the fluidized material re-input part 135 via the on-off valve 132, the fluidized material conveyor 133, and the fluidized material silo 134. The combustion ash of the biomass fuel or the like combusted in the furnace 11 may be mixed in the fluidized material passing through the external circulation mechanism 13. Therefore, a combustion ash separation portion that separates the combustion ash from the fluidized material passing through the external circulation mechanism 13 may be provided based on a difference in particle size or the like. The combustion ash separated by the combustion ash separation portion may be supplied to an alkaline aqueous solution generation unit 81 (described later).

A furnace wall that is a side wall of the furnace 11 is provided with a material supply unit 14 that supplies fuel and another material into the furnace 11, a fluidized material supply unit 15 that supplies a fluidized material for forming the fluidized bed A into the furnace 11, and a starting unit 16 that starts the CFB boiler. The material supply unit 14 includes a funnel-shaped hopper 141 that stores the material, a crusher 142 that crushes a material discharged from a bottom portion of the hopper 141 in a granular shape, and a feeder 143 that supplies the material crushed by the crusher 142 into the furnace 11. Hereinafter, the material supply unit 14 will be described as supplying solid fuel or a solid material. However, the material supply unit 14 may supply fluid fuel such as liquid or gaseous biomass fuel, oil, ammonia, or hydrogen in addition to or instead of the solid fuel.

The material supply unit 14 supplies calcium-containing fuel that contains calcium into the furnace 11. The calcium-containing fuel is not particularly limited, and for example, biomass fuel, sludge, or waste materials can be given. As a result of the combustion of the calcium-containing fuel in the furnace 11, a combustion ash containing calcium in the form of calcium oxide and/or calcium hydroxide or calcium carbonate is generated. The biomass fuel is carbon neutral fuel having a small or zero net carbon dioxide emission. In order to reduce the amount of generated carbon dioxide in the furnace 11, the material supply unit 14 may supply carbon-free fuel that does not contain carbon to the furnace 11 in addition to carbon-containing fuel such as biomass fuel.

The crusher 142 in the material supply unit 14 crushes the material, which is not yet supplied to the furnace 11, in a granular shape. Since the size of the material suitable for the transport of the material to the CFB boiler or the hopper 141 and the size of the material suitable for the combustion of the material in the furnace 11 may be different from each other, the material is crushed into particles having a particle size suitable for the latter by the crusher 142. In a case where a suitable particle size varies depending on a material, the crusher 142 may be provided for each material, and a particle size when the respective materials are sequentially crushed by one crusher 142 may be changed depending on the material. In a case where a problem does not occur even though the material having a particle size stored in the hopper 141 is supplied to the furnace 11 as it is, the crusher 142 may not be provided. Here, the terms "particle", "granular shape", and "particle size" do not refer to a specific size or dimension, and the size or dimension does not matter as long as the material supplied into the furnace 11 exerts a desired action. For example, the terms "lump", "lump form", and "lump diameter" used for relatively large particles and the terms "powder", "powder form", and "powder size" used for relatively small particles are included in "particle", "granular shape", and "particle size" of the present embodiment. A required amount of the granular material crushed by the crusher 142 is input to the furnace 11 by the feeder 143 whose rotation speed can be controlled.

The fluidized material supply unit 15, which supplies a fluidized material for forming the fluidized bed A, includes a funnel-shaped fluidized material hopper 151 that stores a fluidized material, and a fluidized material feeder 152 that supplies a fluidized material discharged from a bottom portion of the fluidized material hopper 151 into the furnace 11. The rotation speed of the fluidized material feeder 152 is controlled, so that a required amount of fluidized material is input to the furnace 11.

The starting unit 16 that starts the CFB boiler includes a starting fuel storage part 161, a starting fuel control valve 162, and a starting burner 163. The starting fuel storage part 161 stores heavy oil as a carbon-containing fuel. The starting fuel control valve 162 controls the amount of heavy oil to be supplied from the starting fuel storage part 161 to the starting burner 163. Specifically, when the CFB boiler is started, the starting fuel control valve 162 is brought into an opened state and supplies the heavy oil stored in the starting fuel storage part 161 to the starting burner 163. The starting burner 163 heats the fluidized material in the fluidized bed A with flame that is caused by the combustion of the heavy oil supplied from the starting fuel control valve 162. Since the starting burner 163 is provided to be inclined downward, the surface of the fluidized bed A formed by the fluidized material is directly heated. As a result, temperatures of the fluidized bed A and the inside of the furnace 11 efficiently rise. Since heating the sand-like fluidized bed A from above as described above, the starting burner 163 is also called an on-sand burner.

After the CFB boiler in which the fluidized bed A and the inside of the furnace 11 are sufficiently heated is started, specifically, after the fuel or the material supplied from the material supply unit 14 can be combusted in the fluidized bed A, the starting fuel control valve 162 is brought into a closed state to stop the supply of the heavy oil to the starting burner 163. In a subsequent normal operation state, the fuel supplied from the material supply unit 14 is combusted in the high-temperature furnace 11.

The combustion section 1 of the CFB boiler has been described in detail above. Subsequently, configurations of the CFB boiler other than the combustion section 1 will be described. The vapor generation section 2 includes a drum 21 that stores water to be used to generate vapor, a water supply pipe 22 through which water is supplied to the drum 21, a water pipe 23 through which the water in the drum 21 is guided into the high-temperature furnace 11 and is heated, and a vapor pipe 24 through which vapor generated from the water heated in the water pipe 23 is discharged from the drum 21 as an output of the CFB boiler. A vapor turbine of a generator 25 is rotated by the vapor output from the vapor pipe 24 to generate electricity. The water supply pipe 22 configures a coal economizer that meanders in the heat transfer section 4 through which the high-temperature exhaust of the combustion section 1 passes and preheats supplied water, and the vapor pipe 24 configures a superheater that meanders in the heat transfer section 4 through which the high-temperature exhaust of the combustion section 1 passes, and that superheats vapor. Similarly, the pressurized air or the like which is supplied into the furnace 11 by the first blower 71 and the second blower 72 is also preheated with the high-temperature exhaust in the heat transfer section 4.

The fluidized material circulation section 3 includes a cyclone 31 that separates and collects a granular fluidized material from the exhaust discharged from an upper portion of the furnace 11, and a seal pot 32 that returns the fluidized material collected by the cyclone 31 into the furnace 11. The cyclone 31 is a cyclone-type powder separator of which an upper portion is formed in a substantially cylindrical shape and a lower portion is formed in a substantially conical shape, and generates air current that spirally descends along an inner wall. When spirally descending along the air current, the granular fluidized material contained in the exhaust discharged from the furnace 11 comes into contact with the inner wall of the cyclone 31, falls, and is then collected.

Since the seal pot 32 provided below the cyclone 31 is filled with a fluidized material, the backflow of unburned gas or the like from the furnace 11 to the cyclone 31 is prevented. The granular fluidized material filling the seal pot 32 gradually returns into the furnace 11 in the form of being pushed out by the weight of a fluidized material newly collected by the cyclone 31. The combustion ash of the biomass fuel or the like combusted in the furnace 11 may be mixed in the fluidized material passing through the seal pot 32. Therefore, a combustion ash separation portion that separates the combustion ash from the fluidized material passing through the seal pot 32 may be provided based on a difference in particle size or the like. The combustion ash separated by the combustion ash separation portion may be supplied to the alkaline aqueous solution generation unit 81 (described later).

The exhaust treatment device 5 separates and collects the combustion ash or the like in the exhaust from the heat transfer section 4, and recovers the combustion ash or the like. The combustion ash separated and recovered by the exhaust treatment device 5 may be supplied to the alkaline aqueous solution generation unit 81 (described later).

The calcium carbonate recovery device 8 is a device that recovers calcium carbonate from the combustion ash of the calcium-containing fuel such as biomass fuel combusted by the CFB boiler as described above. The calcium carbonate recovery device 8 includes the alkaline aqueous solution generation unit 81, a residue separation unit 82, a calcium carbonate elution unit 83, a residue recovery unit 84, a calcium carbonate precipitation unit 85, and a calcium carbonate recovery unit 86.

The alkaline aqueous solution generation unit 81 generates an alkaline aqueous solution by adding water to a calcium-containing combustion ash after the combustion of a calcium-containing fuel such as biomass fuel. As a result of the unique study of the inventors of the present invention, it has been found that the combustion ash in a case where the biomass fuel is used in the CFB boiler or the like contains calcium in the forms of calcium oxide and/or calcium hydroxide and calcium carbonate. When water is added to such a combustion ash, the calcium oxide and/or the calcium hydroxide is dissolved in the water. When the calcium oxide is dissolved in water, an alkaline aqueous solution containing calcium hydroxide is generated according to a chemical reaction formula "CaO + H₂O → Ca(OH)₂". In addition, when the calcium hydroxide is dissolved in water, the calcium hydroxide becomes a calcium hydroxide aqueous solution as it is. The calcium carbonate contained in the combustion ash together with the calcium oxide and/or the calcium hydroxide is not dissolved in water.

The residue separation unit 82 separates a solid residue containing calcium carbonate from the alkaline aqueous solution (calcium hydroxide aqueous solution) generated by the alkaline aqueous solution generation unit 81. As described above, since the calcium carbonate in the combustion ash is present as a solid without being dissolved in water or an alkaline aqueous solution, the calcium hydroxide aqueous solution as a liquid and the solid residue containing the calcium carbonate as a solid can be effectively separated from each other by solid-liquid separation treatment in the residue separation unit 82. The solid residue separated by the residue separation unit 82 includes various other solid components (for example, those containing silicon or sulfur) in addition to calcium carbonate. The residue separation unit 82 does not completely separate the solid and the liquid from each other, and it is preferable to perform solid-liquid separation treatment (incompletely) to such an extent that the solid residue after the separation is immersed in the liquid (water or calcium hydroxide aqueous solution). This is because it is preferable that a certain amount of liquid is present in the treatment of the residue in the calcium carbonate elution unit 83 to be described later.

The calcium carbonate elution unit 83 elutes calcium carbonate by adding carbon dioxide to the solid residue separated by the residue separation unit 82. Specifically, when carbon dioxide is added to the residue, calcium carbonate "CaCO₃" is eluted as calcium hydrogen carbonate "Ca(HCO₃)₂" according to the chemical reaction formula "CaCO₃ + CO₂ + H₂O → Ca(HCO₃)₂". The water "H₂O" in the chemical reaction formula is moisture contained in the liquid separated to the extent that the residue separation unit 82 immerses the solid residue. In addition, it is preferable that the carbon dioxide "CO₂" in the chemical reaction formula is supplied from the exhaust of the CFB boiler. For example, all or a part of the purified exhaust after a combustion ash, soot, dust, or the like is removed by the exhaust treatment device 5 may be supplied to the calcium carbonate elution unit 83. Calcium hydrogen carbonate is effectively eluted by blowing (bubbling) the exhaust from the CFB boiler containing such carbon dioxide into the solid residue immersed in a liquid or into the liquid.

The residue recovery unit 84 recovers the solid residue after calcium carbonate or calcium hydrogen carbonate is eluted in the calcium carbonate elution unit 83. Since calcium carbonate is eluted in the calcium carbonate elution unit 83, the solid residue recovered by the residue recovery unit 84 hardly contains calcium carbonate. Therefore, for the calcium carbonate recovery device 8 that mainly aims to recover calcium carbonate from the combustion ash, the residue (for example, a solid component containing silicon or sulfur) that is an impurity and contains almost no calcium carbonate can be effectively recovered.

The calcium carbonate precipitation unit 85 precipitates the solid calcium carbonate by adding the alkaline aqueous solution (calcium hydroxide aqueous solution) generated by the alkaline aqueous solution generation unit 81 and separated by the residue separation unit 82 to the calcium carbonate eluted by the calcium carbonate elution unit 83. Specifically, the calcium carbonate precipitation unit 85 precipitates calcium hydrogen carbonate eluted in the calcium carbonate elution unit 83 as calcium carbonate by increasing alkalinity by the alkaline aqueous solution (calcium hydroxide aqueous solution).

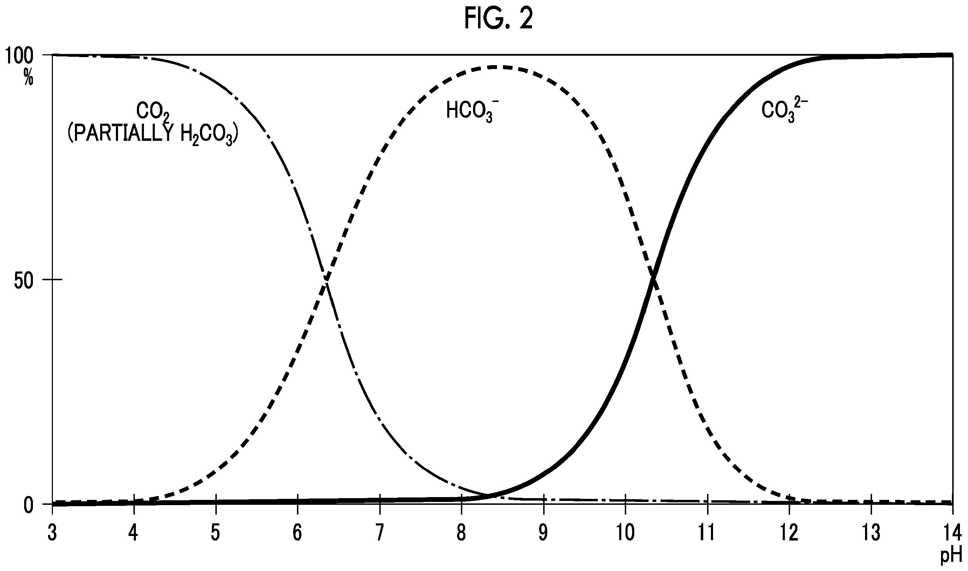

As shown in Fig. 2, the existence proportions of carbon dioxide "CO₂", a hydrogen carbonate ion "HCO₃⁻" and a carbonate ion "CO₃²⁻" vary depending on the pH (hydrogen ion index) of a solution. For example, the solution when calcium hydrogen carbonate is eluted in the calcium carbonate elution unit 83 is in a medium pH region where the hydrogen carbonate ions "HCO₃⁻" are predominant. When the strong alkaline calcium hydroxide aqueous solution generated by the alkaline aqueous solution generation unit 81 is added to such a substantially neutral (or weakly alkaline) calcium hydrogen carbonate aqueous solution, the alkalinity of the solution is increased, and the solution transitions to a high pH region where the carbonate ions "CO₃²⁻" are predominant. The carbonate ions that are generated in large amounts in the strong alkaline solution in this manner combine with calcium ions to generate calcium carbonate as a carbonate. Since calcium carbonate is not dissolved in water, solid calcium carbonate is effectively precipitated in the calcium carbonate precipitation unit 85. In addition, since the alkaline aqueous solution for increasing the alkalinity of the solution is obtained in the calcium carbonate recovery device 8 (the alkaline aqueous solution generation unit 81), there is an advantage that the necessity of procuring the alkaline aqueous solution from outside the calcium carbonate recovery device 8 can be reduced.

The chemical reaction in the calcium carbonate precipitation unit 85 is represented by a chemical reaction formula "Ca(HCO₃)₂ + Ca(OH)₂ → 2CaCO₃ + 2H₂O". The first term, "Ca(HCO₃)₂", of the left side of the chemical reaction formula is derived from the solid (derived from the calcium carbonate contained in the combustion ash) separated by the residue separation unit 82, and the second term, "Ca(OH)₂", is derived from the liquid (derived from the calcium oxide and/or the calcium hydroxide contained in the combustion ash) separated by the residue separation unit 82. In this manner, although the calcium contained in the combustion ash is separated into the solid side and the liquid side by the residue separation unit 82, the calcium is finally precipitated as solid calcium carbonate by the calcium carbonate precipitation unit 85. Therefore, even in a case where the combustion ash contains calcium in a plurality of forms including calcium oxide and/or calcium hydroxide and calcium carbonate, the calcium carbonate can be effectively precipitated and recovered.

The calcium carbonate recovery unit 86 recovers the solid calcium carbonate precipitated by the calcium carbonate precipitation unit 85. Specifically, the calcium carbonate recovery unit 86 separates calcium carbonate as a solid, which is the first term of the right side of the chemical reaction formula "Ca(HCO₃)₂ + Ca(OH)₂→ 2CaCO₃ + 2H₂O", and water as a liquid, which is the second term, by the solid-liquid separation treatment. The water after the solid calcium carbonate is separated and recovered in the calcium carbonate recovery unit 86 is circulated to the alkaline aqueous solution generation unit 81 and added to the combustion ash. In this manner, the water is circulated in the calcium carbonate recovery device 8, so that the calcium carbonate recovery device 8 can be efficiently operated.

When the calcium carbonate recovery method according to the present embodiment was performed by using 400 ml/min of a carbon dioxide-containing gas (a gas mixed with nitrogen such that the proportion of carbon dioxide is 15%) with respect to 4 g of combustion ash and 500 ml of water (the alkaline aqueous solution generation unit 81) (the calcium carbonate elution unit 83), 0.41 g of calcium carbonate was obtained. In contrast, when the calcium carbonate recovery method according to PTL 1 was performed under the same conditions, 0.06 g of calcium carbonate was obtained.

In the method of PTL 1, since calcium carbonate is precipitated from only the liquid component (derived from calcium oxide) from the combustion ash, it is considered that the calcium contained in the solid component (derived from calcium carbonate) from the combustion ash is wasted without being recovered. In addition, the precipitation of calcium carbonate in PTL 1 is performed by bubbling carbon dioxide. However, it is considered that the precipitation efficiency is poor because the existence proportion of carbonate ions is low in a case where the pH of the solution is low as shown in Fig. 2.

On the other hand, according to the present embodiment, calcium carbonate can be effectively recovered from both the liquid component (derived from the calcium oxide and/or the calcium hydroxide) from the combustion ash and the solid component (derived from the calcium carbonate) from the combustion ash. Further, since the precipitation of calcium carbonate is performed in a high pH region, the precipitation efficiency of calcium carbonate can be improved. In addition, since the carbon dioxide in the exhaust of the CFB boiler is separated and recovered as calcium carbonate, so-called carbon capture and storage (CCS) as a measure against global warming or the like can also be realized.

The present invention has been described above based on the embodiment. Various modification examples are possible in the combinations of each component and each process in the embodiment provided as an example, and it is obvious to those skilled in the art that such modification examples are included in the scope of the present invention.

The configuration, operation, and function of each device or each method described in the embodiment can be realized by hardware resources or software resources, or by cooperation of hardware resources and software resources. As the hardware resources, for example, a processor, a ROM, a RAM, and various integrated circuits can be used. As the software resources, for example, programs such as an operating system and an application can be used.

### Industrial Applicability

The present invention relates to a calcium carbonate recovery method and the like.

### Reference Signs List

- 1: combustion section
- 5: exhaust treatment device
- 8: calcium carbonate recovery device
- 11: furnace
- 81: alkaline aqueous solution generation unit
- 82: residue separation unit
- 83: calcium carbonate elution unit
- 84: residue recovery unit
- 85: calcium carbonate precipitation unit
- 86: calcium carbonate recovery unit

## Claims

1. A calcium carbonate recovery method comprising:
an alkaline aqueous solution generation step of generating an alkaline aqueous solution containing calcium hydroxide by adding water to a combustion ash containing calcium oxide and/or the calcium hydroxide and calcium carbonate and dissolving the calcium oxide and/or the calcium hydroxide in the water;
a residue separation step of separating a solid residue containing the calcium carbonate from the alkaline aqueous solution;
a calcium carbonate elution step of eluting the calcium carbonate by adding carbon dioxide to the residue; and
a calcium carbonate precipitation step of precipitating solid calcium carbonate by adding the alkaline aqueous solution to the eluted calcium carbonate.

2. The calcium carbonate recovery method according to claim 1,
wherein in the calcium carbonate elution step, the calcium carbonate is eluted as calcium hydrogen carbonate by adding the carbon dioxide to the residue.

3. The calcium carbonate recovery method according to claim 2,
wherein in the calcium carbonate precipitation step, the calcium hydrogen carbonate is precipitated as the calcium carbonate by increasing alkalinity with the alkaline aqueous solution.

4. The calcium carbonate recovery method according to any one of claims 1 to 3,
wherein water after the solid calcium carbonate is precipitated in the calcium carbonate precipitation step is added to the combustion ash in the alkaline aqueous solution generation step.

5. The calcium carbonate recovery method according to any one of claims 1 to 3,
wherein the combustion ash is an ash after combustion of fuel in a boiler, and
the carbon dioxide contained in an exhaust from the boiler is added to the residue by adding the exhaust to the residue in the calcium carbonate elution step.

6. The calcium carbonate recovery method according to any one of claims 1 to 3, further comprising:
a residue recovery step of recovering the solid residue after the calcium carbonate elution step and before the calcium carbonate precipitation step.

7. The calcium carbonate recovery method according to any one of claims 1 to 3,
wherein the combustion ash is an ash after combustion of biomass fuel.

8. A calcium carbonate recovery device comprising:
an alkaline aqueous solution generation unit configured to generate an alkaline aqueous solution containing calcium hydroxide by adding water to a combustion ash containing calcium oxide and/or the calcium hydroxide and calcium carbonate and dissolving the calcium oxide and/or the calcium hydroxide in the water;
a residue separation unit configured to separates a solid residue containing the calcium carbonate from the alkaline aqueous solution;
a calcium carbonate elution unit configured to elute the calcium carbonate by adding carbon dioxide to the residue; and
a calcium carbonate precipitation unit configured to precipitate solid calcium carbonate by adding the alkaline aqueous solution to the eluted calcium carbonate.

9. A calcium carbonate recovery program that causes a computer to execute:
an alkaline aqueous solution generation step of generating an alkaline aqueous solution containing calcium hydroxide by adding water to a combustion ash containing calcium oxide and/or the calcium hydroxide and calcium carbonate and dissolving the calcium oxide and/or the calcium hydroxide in the water;
a residue separation step of separating a solid residue containing the calcium carbonate from the alkaline aqueous solution;
a calcium carbonate elution step of eluting the calcium carbonate by adding carbon dioxide to the residue; and
a calcium carbonate precipitation step of precipitating solid calcium carbonate by adding the alkaline aqueous solution to the eluted calcium carbonate.
